Europäisches Patentamt

European Patent Office

Office européen des brevets

(19)

(11) **EP 1 562 130 A1**

(12) ## EUROPEAN PATENT APPLICATION

(43) Date of publication:
**10.08.2005 Bulletin 2005/32**

(51) Int Cl.⁷: **G06F 17/50**, G06K 9/22, G06K 9/48

(21) Application number: **04290320.3**

(22) Date of filing: **06.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Dassault Systèmes**
**92156 Suresnes Cedex (FR)**

(72) Inventor: **Rosel, Sébastien**
**91190 Gif sur Yvette (FR)**

(74) Representative: **Cabinet Hirsch**
**58, avenue Marceau**
**75008 Paris (FR)**

(54) **A process for modifying a curve in a computer-aided design system**

(57) For amending a curve (130) in a computer implemented design system, a user inputs a set of points (132) to the system, using a haptic device. Based on the existing curve and on the inputted set of points, a polyline is computed. The amended curve (134) is created on the basis of the polyline. The process makes it possible to amend an existing curve in the design system, without having to use control points. The user may amend the curve with strokes inputted with the haptic device, in a process similar to the process used for paper drafting.

**Fig. 7**

EP 1 562 130 A1

**Description**

The invention relates to the field of computers programs and systems, and more specifically to part design programs and systems.

A number of systems and programs are offered on the market for the design of parts or assemblies of parts, such as the one provided by the applicant under the trademark CATIA. These so-called computer-aided design (CAD) systems allow a user to construct and manipulate complex three-dimensional (3D) models of parts or assembly of parts. A number of different modelling techniques can be used to create a model of an assembly. These techniques include solid modelling, wire-frame modelling, and surface modelling. Solid modelling techniques provide for topological 3D models, where the 3D model is a collection of interconnected edges and faces, for example. Geometrically, a 3D solid model is a collection of trimmed or relimited surfaces that defines a closed skin. The trimmed surfaces correspond to the topological faces bounded by the edges. The closed skin defines a bounded region of 3D space filled with the part's material. Wire-frame modelling techniques, on the other hand, can be used to represent a model as a collection of simple 3D lines, whereas surface modelling can be used to represent a model as a collection of exterior surfaces. CAD systems may combine these, and other, modelling techniques, such as parametric modelling techniques. CAD systems thus provide a representation of modelled objects using edges or lines, in certain cases with faces. The modelled objects comprises a number of lines or edges; these may be represented in various manners, e.g. non-uniform rational B-splines (nurbs), Bezier curves or other algorithms describing a curve. In the rest of this description, the word "curve" is use to describe mathematical curves, that is curves defined by parameters and possibly by a limited number of control points. The word "polylines" is used to describe a spatially ordered set of points in a design system; a polyline comprises all the points in the line or edge. For instance, consider the example of a segment extending from a point A to a point B: the curve is defined by points A and B and the fact that the curve is the part of the straight line passing through points A and B which is limited by these point. On the other hand, the polyline corresponding to the segment is comprised of points A and B and of all points of the segment from A to B. The polyline is ordered, in that the points are ordered from A to B or from B to A.

One feature of design systems is the ability for the user to create or modify curves, using haptic devices such as mouse, trackpads, graphics tablets or the like. Another feature is the ability for the user to connect adjacent curves. Notably, for curves in design systems and notably at points of connection between curves, there may exist constraints on position of the curve, derivatives or tangents, second derivatives or curvatures, or higher degree derivates.

Existing systems require from the user a high level of experience for drafting or modifying curves. For instance, in a prior art system such as AliasStudioTools™ from Alias®, ICEM Surf from ICEM or CATIA® from Dassault Systemes, a curve is defined based on a number of control points, selected by the user. The user may also associate constraints to the control points - such as a value of position, tangent, or curvature at the control point. Creating the curve requires that the user selects the various control points, and, if necessary, the associated constraints. Selecting control points requires a high level of experience from the user, since the resulting curve depends closely on the selection of the points; the dependence of the resulting curves on the control points also varies from one design system to the other. Furthermore, control points may not be located on the curve itself, making it extremely difficult to tune local modifications with the desired precision.

In addition, a curve may be segmented, that is formed of various curves connected at segmenting points. Segmenting a global curve also requires a high level of skill from the user, since a proper selection of segmenting points impacts the resulting global curve, especially if this global curve is later modified. In the rest of this description, for the sake of better understanding, the word "arc" will be used to a segment of a curve; in other words, a segmented curve is formed of several arcs. It should however be clear that such an "arc" is still is nonetheless a curve, the word "arc" being simply used for the sake of avoiding any confusion between a segmented curve and the various curves - or arcs - forming the segmented curve. The segmentation of a curve enables for example the description of local details. In existing design systems, the user may not be aware of the existence of segmenting points in a curve; for instance, in the case of a nurbs, the curve may be formed of various arcs, extending between segmenting points, each arc being represented by a Bezier curve. The user only sees the end points of the curve, but not the intermediate segmenting points.

For modifying an existing curve, the user acts on the control points or their associated constraints. For changing an existing curve, the user may however have to modify several of the control points or all control points, for achieving the required result. Any time the user changes a control point or an associated constraint, the design system computes again the curve.

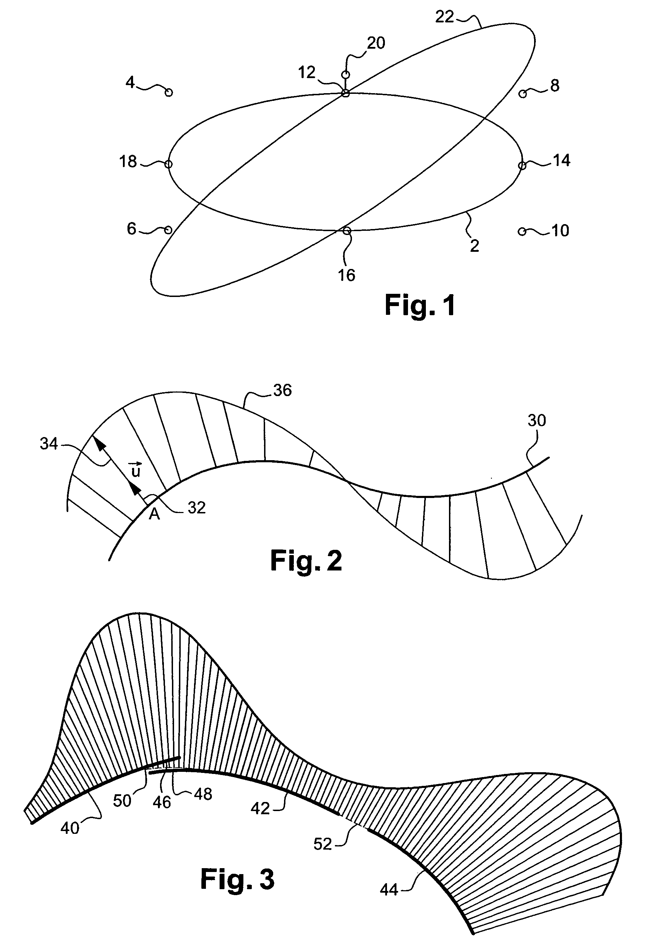

These problems are exemplified in figure 1, in the case of an image created in Microsoft® Word. In this simple example, the control points are not associated with any value. The figure shows an ellipsis 2, which is defined by nine control points; this ellipsis is an example of a curve - which happens to be a closed curve. Control points 4, 6, 8 and 10 are located at the respective corners of a rectangle containing the ellipsis and the sides of which are respectively parallel to the major and minor axes of the ellipsis. Control points 4, 6, 8 and 10 may be used for sizing up and down the ellipsis, in a proportional transformation centred on the opposed control point. Control points 12, 14, 16 and 18 are located at the middles of the sides of the rectangle and are used for lengthening or shortening the ellipsis, in directions parallel to the sides of the rectangle. Last control point 20 is used for rotating the ellipsis, around a centre of rotation located substantially in the middle of the ellipsis. Figure 1 further shows an amended ellipsis 22, the control points of the amended ellipsis being omitted for the sake of clarity. Changing ellipsis 2 into ellipsis 22 requires acting on at least three control points, for lengthening ellipsis 2, increasing the size of the lengthened ellipsis and then rotating the increased ellipsis. Selecting the control points for achieving a given result, even in this simple example, requires a full understanding of the operation of the control points.

The company ALIAS ® offers, for example under the trademark MAYA 5 a design system, in which the user may draft a curve, using a graphics tablet. A curve is created for each stroke of the tablet's pencil, with associated control points. For modifying an existing curve, the user acts on the control points of the curve.

EP-A-1 274 045 discloses a method and system for real-time analysis and display of curve connection quality. The problem addressed in this application is the quality of curves. This application discusses the use of a "comb" representation of the second derivative of the curve, with respect to a curvilinear abscissa, which is also called curvature envelope. The curvature envelop is representative of the shape of a curve. In an orthogonal set of coordinates (x, y), the second derivative is a vector, the coordinates of which are

$$\frac{\partial^2 x}{\partial s^2} \text{ and}$$

$$\frac{\partial^2 y}{\partial s^2}$$

where *s* is the curvilinear abscissa. The curvature C designates the norm of this vector. Of course, the definition generally applies to other types of coordinates, as well known to the person skilled in the art.

Figure 2 shows an example of such a comb, for the second derivative of a curve 30 - in other words the curvature of the curve 30. The value of the second derivative (equalling the acceleration) is computed along the curve; along the curve, one also computes the tangent vector and the normal vector. The normal vector is the vector product of tangent vector and of the acceleration vector:

$$\vec{n} = \vec{t} \wedge \vec{a}$$

Then, the vector product of the normal vector and the tangent vector is computed, giving the vector 32, having a length of 1 and which is orthogonal to the curve 30:

$$\vec{u} = \vec{n} \wedge \vec{t}$$

The "comb" 36 is represented on figure 2 as a number of vectors issued from points along the curve. Figure 2 shows for point A the vector $\vec{u}$ 32 and the computed vector 34 which length is representative of the curvature at point A. In the simplest case (scale 1), vector 34 is the product of curvature C by the vector $\vec{u}$.

The curve 36 - also called envelope - joining the end of the computed vectors 34 for all points of curve 30 is representative of the second derivative and provides the user with a graphical representation of the second derivative. For instance, envelope 36 intersects curve 30 at points where the value of the second derivative is zero and such intersections are representative of changes of curvature (sign of the second derivative) of curve 30. The example of figure 2 displays the second derivative, but a "comb" representation may also be used for higher degree derivatives; in application EP-A-1 274 045, the "comb" representation is used for assessing curve connection quality.

There exists a need for a solution allowing a user of a design system to draft and modify curves, without requiring high level of skills from the user. Ideally, the solution would be user-friendly and would also be easy to understand and implement for the user.

According to the invention, there is provided a computer implemented process for amending a curve, comprising the steps of

- providing a curve;
- receiving a set of points and computing a polyline;

- computing a new polyline based on the curve and on the received set of points;
- creating an amended curve based on the new polyline.

According to an embodiment, the step of computing a new polyline comprises

- retrieving a polyline associated to the curve;
- merging the retrieved polyline and the computed polyline.

The step of retrieving a polyline associated to the curve may comprise retrieving a stored polyline or computing a polyline on the basis of the curve.

According to an embodiment, the step of receiving comprises detecting a stroke inputted by a user on a haptic device, said set of point corresponding to points of the stroke. The step of receiving may also comprise receiving a template.

In a particular embodiment of the invention, the process further comprising repeating the steps of receiving, computing and creating, using the previously amended curve in the step of computing.

Preferably, the repeating is carried out for a new stroke inputted by a user on a haptic device.

According to a particular embodiment, the step of creating comprises

- computing a polyline based on the received set of points;
- computing curvature along the polyline;
- determining particular points on the polyline, the particular points comprising extrema of curvature;
- determining at least one segmenting point on the polyline, apart from the particular points;
- computing a curve passing through the segmenting points and fitting said curve to the polyline.

The particular points may comprise points where the value of the curvature is zero and points limiting a portion of the polyline where the value of the curvature is constant.

According to an embodiment, the step of determining comprises selecting one segmenting point between two adjacent particular points.

In an embodiment, the segmenting point is selected according to the relative value of

- the integral of the curvature along the curve from one of said two adjacent particular points to the segmenting point and
- the integral of the curvature along the curve from the segmenting point to the other one of said two adjacent particular points.

According to a particular embodiment, the step of fitting comprises minimizing the energy of the curve.

The invention further provides a computer program for amending a curve, comprising

- a routine for providing a curve;
- a routine for receiving a set of points and computing a polyline;
- a routine for computing a new polyline based on the curve and on the received set of points;
- a routine for creating an amended curve based on the new polyline.

A computer-aided design system embodying the invention will now be described, by way of non-limiting example, and in reference to the accompanying drawings, where :

- figure 1 is an exemplary view of a curve with its control points, in a prior art design system;
- figure 2 is a view of a curve with a curvature envelope, as provided in the prior art;
- figure 3 is a view of a various sets of points together with a polyline based on the sets of points;
- figure 4 is a graph of the curvature as a function of the curvilinear abscissa, for a polyline;
- figure 5 is a flowchart of the process used for creating a curve according to the invention;
- figure 6 is a view of sets of points, with a curve created in the process of figure 5;
- figure 7 is a view of a curve, which is to be modified by the user;
- figure 8 is a flowchart of the process used for modifying the curve of figure 7;
- figure 9 is a view of a curve, with a template used for modifying the curve.

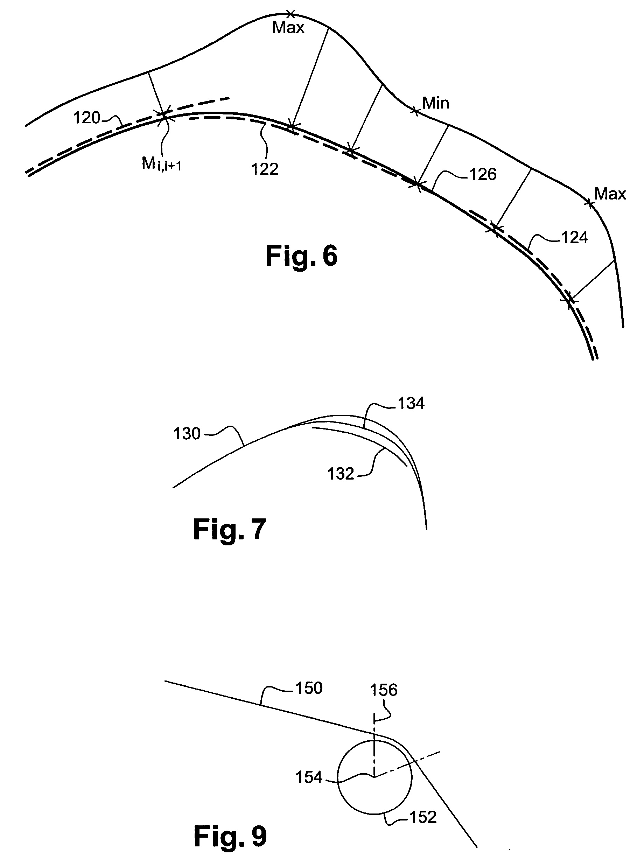

The invention makes it possible to create a curve, starting from a set of points created by the user of a design system. The set of points may be inputted by the user with any type of haptic device, e.g. a mouse, a trackpad, a graphics tablet or the like. Based on the set of points, a curve is created, as explained in reference to figures 3-6. An existing curve may also be modified, as explained in reference to figures 7-8.

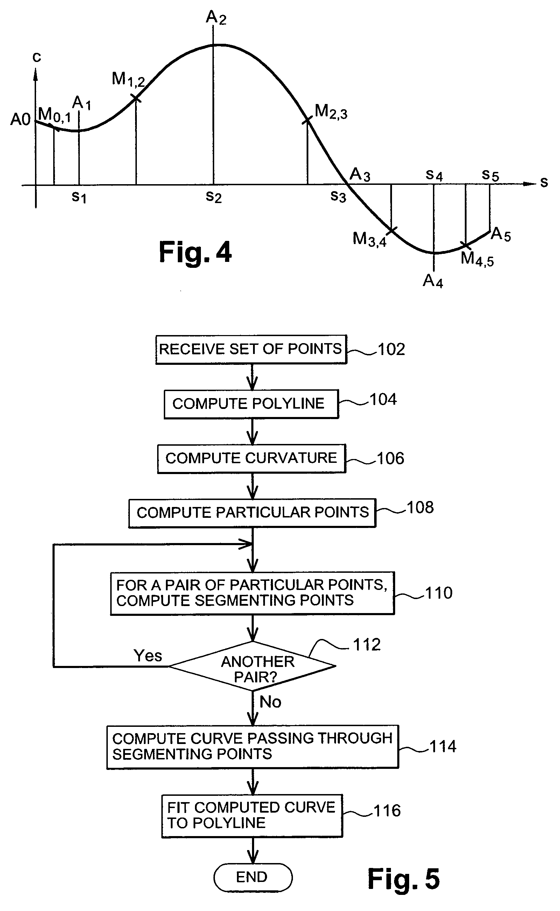

Creation of a curve is now described in reference to figures 3-6. Figure 3 shows a set of points inputted by the user. In the example of figure 3, the user has drafted three strokes 40, 42 and 44 with the haptic device, e.g. three strokes of the pencil of the graphics tablet. These strokes are represented in figure 3 and result in a set of points. From the user's perspective, the drafting of the three strokes is representative of the intention to create a curve passing substantially through the various strokes. From the design system's perspective, in step 102 of figure 5, a set of points is created. The user interface invoked for creating the set of points may any usual or specific user interface, which allows the user to indicate his intention to input a set of points. Each stroke may be handled by the system as a polyline, since the points are naturally ordered along the stroke.

Based on the set of points received or created in step 102, the system computes a single resulting polyline in step 104 of figure 4. Solutions for carrying out this step are known *per se* to the person skilled in the art of computer drafting and are not further explained. This step may simply involve dealing with overlap and discontinuities, as explained in reference to the example of figure 3. In the example of figure 3, the strokes partially overlap; thus, the right-hand end of first stroke 40 is substantially parallel to the left-hand end of second stroke 42. This may be identified, e. g. by assessing that the distance between strokes 40 and 42 is below a given limit. At this time, it is possible to eliminate duplicate points. For instance, in reference to figure 3, the points in section 46 of first stroke 40 and section 48 of second stroke 42 could be replaced by the points in dotted line 50. Dotted line 50 is obtained by merging thanks to any known methods (averaging or the like) sections 46 and 48, which overlap. Strokes 42 and 44 do not overlap and will be joined at their ends by any known convenient methods such as blending, to obtain the dotted line 52. This means that the single polyline obtained after step 104 of figure 5, in the example of figure 3, will be comprised of five sections, that is

- stroke 40, with the exception of section 46,
- dotted line 50,
- stroke 42, with the exception of section 48,
- dotted line 52;
- stroke 44.

Cancelling overlapping sections of strokes may not be necessary, according to the points inputted by the user. More generally, deleting duplicate points in the set or similar treatments may be carried out and may be included, if necessary, in the step 104 of computing a single polyline. One could also use, in step 104, smoothing treatments or other solutions known *per se* to the person skilled in the art.

It is to be noted that steps 102 and 104 are discussed as separate steps in the example of figure 3, since the example deals with three strokes, which with overlap and discontinuities. Actually, steps 102 and 104 may be a single step, e.g. in the example where the user inputs a single stroke, which is handled by the system as a single polyline.

Once the single polyline is computed, the process passes to step 106 in figure 5. In step 106, the curvature along the polyline is computed. The curvature is used to determine how to find segmenting points on the polyline, as disclosed in steps 108-112. Thus, the polyline is cut or segmented into portions, each portion extending between two segmenting points. The following rules are preferably applied:

- any extremum — maximum or minimum - of curvature should be included in one single portion;
- and, optionally, a change of sign of the curvature should be included in one single portion.

In other words, particular points - global or local extrema, points of zero curvature, or the like such as points limiting a constant curvature portion of the polyline-should not be a connecting point, also called segmenting points, between adjacent portions, but should be within a portion. These rules stem are derived from the fact that fitting curves, as used in the following steps of the process, provide a better fit when the change in curvature is not too important. The steps of the process used for selecting or determining segmenting points on the polyline are explained in reference to figure 4, which shows a graph of the curvature C, as a function of the curvilinear abscissa $s$ of the polyline. The graph of figure 4 does not correspond to the example of figure 3 but shows, for the sake of explanation, various extrema $A_0$ to $A_5$. Specifically, in the graph of figure 4, abscissa $s = 0$, $s_2$ and $s_5$ correspond to maxima of curvature, the point with the abscissa $s_2$ being a global maximum. In this graph, the points of abscissa $s_1$ and $s_4$ correspond to minima (or dips) of curvature, the point with the abscissa $s_4$ being a global minimum; the point of abscissa $s_3$ is remarkable in that the curvature is zero.

One preferred solution for segmenting the polyline into portions is to create one portion for each of the particular points in the graph of curvature. This solution may be carried simply by first computing the particular points in the graph of curvature, as represented in step 108 of figure 5. One should understand that this does not require any graphical representation, figure 4 being solely provided for the sake of explanation.

Once the particular points are computed, one selects a segmenting point between two adjacent particular points, as represented in steps 110 and 112 of figure 4; in step 110, for a couple of adjacent particular points, a segmenting point is selected; in step 112, the process checks whether more segmenting points are needed or not, if there are couples of particular points, the process passes again to step 110, else it passes to step 114. A first solution for selecting a segmenting point between two adjacent particular points is to select the point of the curve having the curvilinear abscissa in the middle of the two particular points. In the example of points $A_1$ and $A_2$ in the graph of figure 1, one could select the point $M_{1,2}$ of the curve having an abscissa $s$ of $(s_1 + s_2)/2$. This solution is easy to implement and ensures that the segmentation point is as far as possible from the particular points; this increases the quality of the fitting arc computed in the following steps; one may use a ratio different from 2. A second solution consists in selecting a segmenting point according to the integral of the curvature between the adjacent particular points and the segmenting point. This solution has the advantage of ensuring a better location of the segmenting point, which provides a better fit of the arc in the following steps. Let $A_i$ and $A_{i+1}$ be the particular points between which one segmenting point has to be selected, with $s_i$ and $s_{i+1}$ the respective abscissas of these particular points. For the sake of explanation, it is assumed that $s_i < s_{i+1}$. $A_i$ and $A_{i+1}$ may be

- two extrema - one minimum and one maximum; or
- an extremum - minimum or maximum - and a point where the value of the curvature is zero.

In the first case, assume the curvature is increasing from $A_i$ to $A_{i+1}$, so that $A_i$ is a minimum and $A_{i+1}$ is a maximum. The point $M_{i,i+1}$ is selected such that

$$k_M \int_{A_i}^{M_{i,i+1}} C(s)ds = \int_{M_{i,i+1}}^{A_{i+1}} C(s)ds \qquad (1)$$

with $k_M$ a constant, the value of which is chosen for example between 0,1 and 0,5. The lower the value of $k_M$, the nearer the segmenting point is to the maximum; the higher the value of $k_M$, the closer the segmenting point is to the minimum. Equation (1) also applies where $A_i$ is a maximum and $A_{i+1}$ is a minimum, with the proviso that constant $k_M$ is multiplied to the integral having as a boundary the point which is a minimum of curvature.

In the second case, assume the curvature is decreasing from $A_i$ to $A_{i+1}$, and that $A_i$ is a maximum and $A_{i+1}$ a point where the value of curvature is zero. The point $M_{i, i+1}$ is selected such that

$$k_I \int_{A_i}^{M_{i,i+1}} C(s)ds = \int_{M_{i,i+1}}^{A_{i+1}} C(s)ds \qquad (2)$$

with $k_I$ a constant, the value of which is chosen between 0,5 and 0,9. The lower the value of $k_I$, the nearer the segmenting point is to the point where the curvature is zero; the higher the value of $k_I$, the closer the segmenting point is to the extremum. Equation (2) also applies where the curvature is increasing from $A_i$ to $A_{i+1}$, or where $A_i$ is a point where the value of curvature is zero; the only difference is that constant $k_I$ is multiplied to the integral having as a boundary the point which is an extremum.

Equations (1) and (2) compare the integral of the curvature along the curve, from the first particular point $A_i$ to the segmenting point $M_{i,i+1}$ and from the segmenting point $M_{i,i+1}$ to the second particular point $A_{i+1}$.

In the previous example, one considered that a segmenting point is added between each pair of adjacent particular points. This is by no means compulsory. For instance, where particular points are too close one to the other, it may be decided not to add a segmenting point between adjacent particular points. This may also be the case where the change in curvature between adjacent points is quite low; In the example of figure 5, it is assumed that a segmenting point is added between each pair of adjacent particular points; figure 4 thus shows five segmenting points $M_{0,1}$, $M_{1,2}$, $M_{2,3}$ and $M_{3,4}$ and $M_{4,5}$.

After step 112, when the process passes to step 114, the polyline formed out of the set of points is split into a number of portions, defined by the segmenting points. One may add to the segmenting points the end points of the curve. In step 114, one computes a curve passing through each of the segmenting points. This may be done, for instance by computing a nurbs, or a Bezier curve passing by the segmenting points; one may use at this step any type of algorithm known *per se* to the person skilled in the art.

At next step 116, the computed curve is fitted to the polyline determined in step 104, under the constraint that the curve passes through each of the segmenting points. Fitting may be carried out by any algorithm known *per se* in the art. One may for instance minimize the distance between the computed curve and the polyline, that is minimize the following summation

$$\sum_{j\text{ in the set}} d(N_j)$$

where $N_j$ are the various points of the polyline and where $d(N_j)$ is the distance between point $N_j$ and the computed curve. This solution has the advantage of increased computing speed. Another solution is to minimize the "energy", that is, minimize the summation

$$\sum_{j\text{ in the set}} \left(d(N_j)\right)^2$$

Such "energy" fit has the advantage of an accurate fitting. Steps 114 and 116 are depicted as separate in figure 5. However, both steps could be combined in a single step, depending on the type of algorithm used.

The fitting in step 116 provides the resulting curve. The curve is based on the received set of points and on the resulting polyline. The curve is computed (step 114) and fitted (step 116) using the segmenting points; since the segmenting points are "far" from the particular points in the polyline, the curve is fitted with a high degree of freedom in the vicinity of the particular points. This ensures that the curve obtained in the process of figure 5 is a good representation of the set of points around the particular points. Tests carried out by the inventors have demonstrated that the particular points actually prove to be the most important points of the curve for the end-user. Thus, the process provides a curve that is particularly well fitted to the set of points and corresponds to the curve that could be obtained by a skilled user in a prior art system.

Figure 6 is a view of a set of points, with a curve created in the process of figure 5. In the example of figure 6, the set of points is defined by three strokes (in dotted lines) 120, 122 and 124 of the haptic device. The curve is referenced 126. The segmentation points are crossed on the curve. As explained above, segmentation points $M_{i,i+1}$ are "far" from the particular points (Min, Max) in the curve. In the example of figure 6, the process uses the following algorithms:

-    computation of a single polyline from one or more set of points;
-    selection of segmenting points as disclosed in step 110 of figure 5, with $k_M$ = 0,3 and $k_I$ = 0,6.
-    computation of curve passing through segmenting points using an algorithm for a computing a NURBS;
-    fitting of curve to the set of points using energy minimization.

The curve and the polyline are so fitted that they are superimposed on figure 6. The process is carried out by a computer program written in C++ language. The program uses libraries provided by Dassault Systemes. For strokes of the haptic device comprising around 1000 points, the program is executed in less than 0,1 second on a computer with the following features: Intel Pentium 4 2GhZ. The resulting curve is stored, using approximately 1 Kbytes of memory for the curve. The set of points need not be stored.

The process of figures 3-6 makes it possible, based on a set of points inputted by the user, to create a curve, without requiring high levels of skill from the user. In reference to figures 7-8 is described a process for amending or modifying an existing curve. Again, the process makes it possible to amend the curve without requiring high levels of skill from the user.

Figure 7 is a view of a curve 130. It is assumed that the user of the computer-aided design system now wishes to amend curve 130 - for any reason relevant to the design he is currently carrying out. In the prior art solution, the user would simply select the curve, select one or more of the control points and change one or more of the control points. As explained above, this requires some skills and some understanding of the operation of the underlying design system.

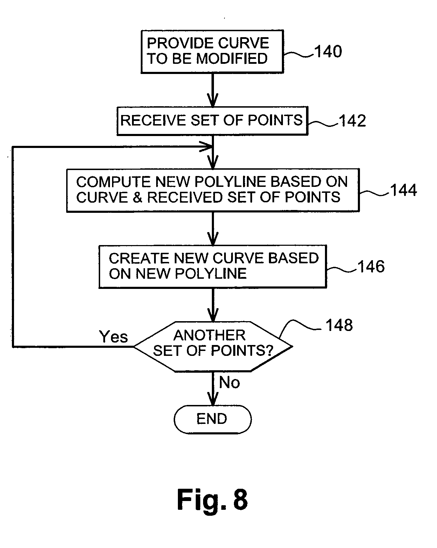

In the proposed solution, the user simply needs to input more points, using the haptic device. Figure 7 thus represents an additional stroke 132 of the haptic device, by which the user intends to modify curve 130. In the example, one understands that the summit of the curve is too angled and that the user intends to modify the curve so that it goes closer to the stroke 132. Figure 7 further shows the resulting curve 134, as obtained in the process of figure 8.

Figure 8 is a flowchart of a process for modifying a curve. The process of figure 8 preferably uses the creating process disclosed in reference to figures 3-6. However, one may also use other type of solutions for creating a curve, provided these solutions make it possible to create a curve on the basis of a set of points.

In step 140 of figure 8, there is provided a curve - the curve 130 to be modified in the example of figure 7.

In step 142, the user creates a set of points, representative of the amendments the user wishes to implement on the curve. As explained in reference to step 102 of figure 5, this step may involve a variety of devices for allowing the user to input a set of points. In the same step and as explained above in reference to step 104, one computes a polyline.

In step 144, the process computes a new polyline, based on the curve 130 of step 140 and on polyline computed in step 142. Practically speaking, this is done by finding a polyline associated to the curve 130. As explained below, this polyline may have been stored in the memory of the system at the time of the creation of the curve. The polyline may also be computed anew on the basis of the curve 130, if it is not stored.

In the process, the weight given to the curve may be similar to the weight given to the points inputted by the user. One may of course implement other assumptions, by given more or less importance to the initial curve 130 or to the points inputted by the user. The relative importance of the curve and of the points may also be set by the user himself. One understands that the user may wish that amendments to the curve be more or less rapid, according to the stage in the design process.

For providing the new set of points in step 144, one may use the solutions discussed above in reference to figure 3.. For instance, one could use any algorithm enabling the merge of the two polylines such as averaging the polylines, blending and the like.

In step 146, the polyline obtained in step 144 is used for creating a new curve. At this step, one may use the process of figure 5.

The result of step 146 is a curve, computed on the basis of the new polyline. The curve obtained in step 146 is representative of the amendments required by the user. The curve is amended without requiring from the user any specific knowledge of the drafting algorithm, and without requiring any control point.

The process of figure 8 may be carried out on-the-line, any time the user inputs a new set of points. Assume for instance the haptic device used for inputting points is a graphics tablet. A set of points may be comprised of the various points inputted in a given stroke of the pencil on the graphics tablet; in other words, a set of points is comprised of the points on the graphics tablet between the time the user presses the pencil on the tablet and the time the user raises the pencil from the tablet. Once a first set of points is inputted, a polyline is generated and a curve is created - e.g. as described in reference to figure 5. Every time a new set of points is inputted, that is for every stroke of the pencil, the previous curve is amended, as described in reference to figure 8, thanks to a dynamic re-segmentation of the curve. In other words, after step 146 of figure 8, the process awaits for a new set of points, at step 148. When a new set of points in entered by the user, the process passes again to step 144 and computes a new curve. Looping through steps 144, 146 and 148 makes it possible for the user to amend a curve, using a process that looks and feels like the actual drawing process used on a sheet of paper and even better because the previous strokes do not appear on the screen, only the resulting curve being displayed. The process makes it possible for the user to create and amend a curve, without specific skills. The results obtained are similar to the results obtained by a highly skilled user in a prior art system.

In the example provided in reference to figure 7 and 8, the new polyline is computed on the basis of the polyline associated to the existing curve and of the set of points inputted by the user. As seen, said new polyline may be stored together with the curve; in this case, the next time the process is used, one may retrieve the polyline associated with the curve, without having to re-computed a polyline based on the curve. This solution has the advantage of avoiding the need to re-compute a polyline on the basis of the existing curve. The solution is particularly useful when the process is used for computing a curve on the basis of a series of pencil strokes of the user. After each pencil stroke, one may then store a curve and the corresponding polyline. The stored polyline is then used at the time the user inputs a new stroke.

The process of figures 7 and 8 is described above in reference to the example of a set of points inputted by the user using a haptic device. Set of points may also be inputted by other means. For instance, templates may be used for inputting points, as explained in reference to figure 9. This figure shows a curve 150, which is to be amended. The figure further shows a template, in the example a circle 152. This circle 152 may be defined by the user, by selecting a centre 154 and a radius. Template 152 is used as a set of points for modifying the curve 150. One may simply consider the set of points formed by the template; alternatively, the set of points may be formed of only some of the points of the circle. In the example of figure 9, if the purpose is to amend the curve so that it conforms to the circle 152 at the apex of the curve, one may simply consider for the set of points the points of the circle which are within the angular sector 156 - represented in figure 9 in interrupted lines. The angular sector 156 may be selected by the user. Another solution is to define the set of points are those points in the template which are within a predetermined distance from the curve to be amended; if this solution is used, the predetermined distance may be fixed or may be selected by the user. In all instances, the use of templates makes it possible for the user to amend a curve, so that it conforms to a given shape or to a previously stored shape. The template may be a given shape — a circle, a straight line or any other type of parametric shape specified by the user. The template may also be a previously stored shape, such as the shape of a previously designed curve, stored by the user or be offered by the design system.

The invention is not limited to the examples provided in the detailed description. One may allow the user to interact with the process; for instance, the user may himself define the beginning and the end of the entering for the set of points. The computer-aided design system may allow the user to select between various types of design methods, such as the one of figure 5 or the one of figure 8 with a loop through steps 144-148. One may combine the solutions disclosed above with prior art solutions. For instance, the user may be allowed to use one or more control points; thus, when a satisfactory section of curve is obtained, the user may segment the curve or fix some points in the curve, before amending the rest of the curve. Using templates for inputting points is discussed in reference to figures 7-9; this solution also applies to the process of figures 3-6.

**Claims**

1. A computer implemented process for amending a curve, comprising the steps of

   - providing (140) a curve;
   - receiving (142) a set of points and computing a polyline;
   - computing (144) a new polyline based on the curve and on the received set of points;
   - creating (146) an amended curve based on the new polyline.

2. The process of claim 1, wherein the step of computing a new polyline comprises

   - retrieving a polyline associated to the curve;
   - merging the retrieved polyline and the computed polyline.

3. The process of claim 2, wherein the step of retrieving a polyline associated to the curve comprises retrieving a stored polyline.

4. The process of claim 2, wherein the step of retrieving a polyline associated to the curve comprises computing a polyline on the basis of the curve.

5. The process of one of claims 1 to 4, wherein the step of receiving comprises detecting a stroke inputted by a user on a haptic device, said set of point corresponding to points of the stroke.

6. The process of one of claims 1 to 4, wherein the step of receiving comprises receiving a template.

7. The process of one of claims 1 to 6, further comprising repeating the steps of receiving, computing and creating, using the previously amended curve in the step of computing.

8. The process of claim 7, wherein the repeating is carried out for a new stroke inputted by a user on a haptic device.

9. The process of one of claims 1 to 8, wherein the step of creating comprises

   - computing (104) a polyline based on the received set of points;
   - computing curvature along the polyline;
   - determining (108) particular points ($A_0$, $A_1$, $A_2$, $A_3$, $A_4$, $A_5$) on the polyline, the particular points comprising extrema of curvature;
   - determining (110, 112) at least one segmenting point ($M_{0,1}$, $M_{1,2}$, $M_{2,3}$, $M_{3,4}$, $M_{4,5}$) on the polyline, apart from the particular points;
   - computing (114) a curve passing through the segmenting points and fitting said curve (116) to the polyline.

10. The process of claim 9, wherein the particular points comprise points where the value of the curvature is zero.

11. The process of claim 9 or 10, wherein the particular points further comprise points limiting a portion of the polyline where the value of the curvature is constant.

12. The process of one of claims 9 to 11, wherein the step of determining comprises selecting one segmenting point between two adjacent particular points.

**13.** The process of claim 12, wherein the segmenting point is selected according to the relative value of

- the integral of the curvature along the curve from one of said two adjacent particular points to the segmenting point and
- the integral of the curvature along the curve from the segmenting point to the other one of said two adjacent particular points.

**14.** The process of one of claims 9 to 13, wherein the step of fitting (116) comprises minimizing the energy of the curve.

**15.** A computer program for amending a curve, comprising

- a routine for providing (140) a curve;
- a routine for receiving (142) a set of points and computing a polyline;
- a routine for computing (144) a new polyline based on the curve and on the received set of points;
- a routine for creating (146) an amended curve based on the new polyline.

**Fig. 1**

**Fig. 2**

**Fig. 3**

**Fig. 4**

RECEIVE SET OF POINTS — 102

COMPUTE POLYLINE — 104

COMPUTE CURVATURE — 106

COMPUTE PARTICULAR POINTS — 108

FOR A PAIR OF PARTICULAR POINTS, COMPUTE SEGMENTING POINTS — 110

ANOTHER PAIR? — 112

Yes

No

COMPUTE CURVE PASSING THROUGH SEGMENTING POINTS — 114

FIT COMPUTED CURVE TO POLYLINE — 116

END

**Fig. 5**

**Fig. 6**

**Fig. 7**

**Fig. 9**

```
┌─────────────────────┐
│  PROVIDE CURVE      │──140
│  TO BE MODIFIED     │
└─────────────────────┘
          │
          ▼
┌─────────────────────┐
│ RECEIVE SET OF POINTS│──142
└─────────────────────┘
          │
          ▼
┌─────────────────────────────┐
│ COMPUTE NEW POLYLINE BASED ON│──144
│ CURVE & RECEIVED SET OF POINTS│
└─────────────────────────────┘
          │
          ▼
┌─────────────────────┐
│ CREATE NEW CURVE BASED│──146
│ ON NEW POLYLINE      │
└─────────────────────┘
          │
          ▼
   ANOTHER      ──148
   SET OF POINTS?
```

Yes

No

END

**Fig. 8**

European Patent
Office

**EUROPEAN SEARCH REPORT**

Application Number

EP 04 29 0320

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BAUDEL T: "A mark-based interaction paradigm for free-hand drawing" 1994, NEW YORK, NY, USA, ACM, USA, 2 November 1994 (1994-11-02), pages 185-192, XP002285774 ISBN: 0-89791-657-3 * abstract * * page 186, column 2, paragraph 4 * * page 187, column 2, paragraph 2 - page 188, column 2, paragraph 2 * * figures 2-5,8,9 * ----- | 1-15 | G06F17/50 G06K9/22 G06K9/48 |
| X | EP 0 953 944 A (ADOBE SYSTEMS INC) 3 November 1999 (1999-11-03) * abstract * * paragraphs [0049], [0052] * * paragraphs [0073], [0078], [0079] * * paragraphs [0083], [0085] * * figures 20a-g,23 * ----- | 1-15 | |
| A | WO 95/32485 A (MOTOROLA INC) 30 November 1995 (1995-11-30) * abstract * * page 3, lines 23-31 * * figure 1 * ----- | 9-14 | TECHNICAL FIELDS SEARCHED (Int.Cl.7) G06F G06K G06T |
| A | QIN S-F ET AL: "On-line segmentation of freehand sketches by knowledge-based nonlinear thresholding operations" PATTERN RECOGNITION, PERGAMON PRESS INC. ELMSFORD, N.Y, US, vol. 34, no. 10, October 2001 (2001-10), pages 1885-1893, XP004362578 ISSN: 0031-3203 * abstract * * page 1889, column 1, paragraph 1 - page 1890, column 1, paragraph 8 * * page 1891, column 1, paragraph 2 * ----- -/-- | 9-14 | |

The present search report has been drawn up for all claims

| Place of search | Date of completion of the search | Examiner |
|---|---|---|
| Munich | 5 July 2004 | Sohrt, W |

EPO FORM 1503 03.82 (P04C01)

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 274 045 A (DASSAULT SYS OF AMERICA) 8 January 2003 (2003-01-08) * abstract * ----- | 1-15 | |

TECHNICAL FIELDS SEARCHED (Int.Cl.7)

The present search report has been drawn up for all claims

| Place of search | Date of completion of the search | Examiner |
|---|---|---|
| Munich | 5 July 2004 | Sohrt, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 04 29 0320

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2004

| Patent document cited in search report | | Publication date | Patent family member(s) | | Publication date |
|---|---|---|---|---|---|
| EP 0953944 | A | 03-11-1999 | US | 6208355 B1 | 27-03-2001 |
| | | | EP | 0953944 A2 | 03-11-1999 |
| | | | JP | 11328431 A | 30-11-1999 |
| WO 9532485 | A | 30-11-1995 | AU | 2431695 A | 18-12-1995 |
| | | | BR | 9506197 A | 24-04-1996 |
| | | | CA | 2162489 A1 | 01-06-1998 |
| | | | CN | 1128074 A | 31-07-1996 |
| | | | CZ | 9600061 A3 | 12-06-1996 |
| | | | EP | 0710384 A1 | 08-05-1996 |
| | | | FI | 960110 A | 10-01-1996 |
| | | | HU | 75820 A2 | 28-05-1997 |
| | | | JP | 2002515144 T | 21-05-2002 |
| | | | NO | 955064 A | 14-12-1995 |
| | | | PL | 312469 A1 | 29-04-1996 |
| | | | SK | 3096 A3 | 01-10-1996 |
| | | | WO | 9532485 A1 | 30-11-1995 |
| EP 1274045 | A | 08-01-2003 | US | 2003065487 A1 | 03-04-2003 |
| | | | CA | 2390881 A1 | 03-01-2003 |
| | | | EP | 1274045 A2 | 08-01-2003 |
| | | | JP | 2003067428 A | 07-03-2003 |

EPO FORM P0459

For more details about this annex : see Official Journal of the European Patent Office, No. 12/82